# DEMANDE DE BREVET EUROPEEN

(11) **EP 1 716 819 A1**
(43) Date de publication de la demande: **02.11.2006**
(21) Numéro de dépôt: 05354019.1
(22) Date de dépôt: 26.04.2005
(51) Int. Cl.: A61C 13/30

(54) **Ancrage canalaire dentaire anatomique et préfabriqué**

(71) Demandeur: Clunet-Coste, Bruno, F-38960 Saint-Etienne-de-Crossey (FR); Maneuf, Bernard, 38500 Voiron (FR); Collombin, André, 38500 Voiron (FR)
(72) Inventeur: Clunet-Coste, Bruno, F-38960 Saint-Etienne-de-Crossey (FR); Maneuf, Bernard, 38500 Voiron (FR); Collombin, André, 38500 Voiron (FR)
(74) Mandataire: Hecké, Gérard

(57) **Abrégé**

Ancrage canalaire dentaire anatomique profilé et préfabriqué dépourvu d'axe de révolution, et s'encastrant dans la partie coronaire du canal dentaire après lissage des parois au moyen d'outils reproduisant la forme de l'ancrage et animés d'un mouvement de va et vient ou d'outils de rotation autour d'un axe lui-même animé d'une trajectoire spécifique. Le tenon 2 possède dans sa partie active d'ancrage au moins deux sections non homothétiques entre elles et différentes dans le sens de la hauteur. Cet ancrage peut être fabriqué dans un matériau isotrope, ou bien composite renforcé avec des fibres et particules.

## Description

### Domaine technique de l'invention

L'invention concerne un ancrage canalaire dentaire destiné à retenir les obturations coronaires respectant les particularités anatomiques et physiologiques du canal radiculaire.

En dentisterie, et notamment en endodontie, les canaux radiculaires doivent être obturés hermétiquement. On fait généralement usage de certains matériaux spécifiques, tels que des cônes cylindro-coniques en gutta-percha, ou bien des pâtes à l'oxyde de zinc / eugénol, ou encore par exemple à des résines sous forme de préparations bi composant qui sont envoyées dans le cana! par des moyens mécaniques. Ces moyens mécaniques sont en général basés sur un alésage avec des outils rotatifs ou ultrasoniques cylindro-coniques.

Lorsque la partie coronaire de la dent doit être reconstruite, un tenon est généralement introduit et scellé dans le canal radiculaire après mise en forme pour servir d'ancrage à une reconstitution coronaire. Pour assurer une bonne tenue mécanique, le tenon doit pénétrer jusqu'au tiers apical de la racine.

### Etat de la technique

Selon le document CH-A-562605, les tenons peuvent être en matériau métallique, et sont pourvus chacun d'un filetage destiné à visser la base du tenon dans le canal radiculaire. Ces tenons sont fabriqués par tournage et leur section est toujours circulaire avec un profil en forme de cône ou cylindro-coniques, avec des angles rentrants ou sortants.

Des tenons en matériau composite préfabriqué, éventuellement renforcé par des fibres, sont décrits dans les documents US-A-4936776, DE-A-3825601, et EP-A-0432001.
Tous ces tenons connus présentent une forme finie cylindrique ou cylindro-conique rectiligne, et une structure rigide. Ils ne peuvent donc en aucun cas épouser l'éventuelle courbure d'une racine, et le praticien doit alors élargir le canal, et en rectifier le trajet pour permettre la mise en place du tenon.

Ces tenons peuvent être dangereux, étant donné que les canaux peuvent être courbes, les racines plates ou concaves avec un canal mal centré. Le canal est le plus souvent de section aplatie, ovale ou en forme de huit. Il est souvent très évasé dans sa partie coronaire et de section ovalaire.

La préparation du logement du tenon par alésage mécanique oblige à des préparations circulaires avec un déplacement du canal du côté de la courbe, un affaiblissement de la paroi canalaire et un risque élevé de fragilisation et de perforation.

De plus, il est recherché une adaptation précise du tenon pour optimiser la rétention et le collage et par là un bon écoulement des contraintes fonctionnelles.

La recherche de contacts maximums entre le tenon et les murs canalaires et la nécessité d'une mutilation dentinaire minimale oblige le praticien à faire le choix suivant :
- soit, l'utilisation de forets de diamètre élevé avec un risque important de perforation,
- soit l'utilisation d'un foret de diamètre raisonnable, et le tenon ne possédera que des contacts partiels avec des zones non instrumentées ou souillées de matériel d'obturation, ce qui va dans le sens inverse d'un bon collage et d'une bonne transmission des contraintes.

Le document FR-A-2753365 décrit un tenon endo-canalaire flexible et malléable avant et pendant l'introduction de l'insert dans le canal radiculaire, ledit matériau étant ensuite polymérisable à la demande par des moyens de réticulation pour passer dans un deuxième état polymérisé après l'introduction de l'insert dans ledit canal. Ce renfort permet un alésage moins important du canal, réduisant les risques de sur alésage et de fragilisation ou de perforation des parois canalaires. L'insert selon ce document est de section cylindrique.

Le document GB 1255875 décrit un ancrage canalaire dentaire anatomique ayant une section non circulaire, notamment en forme d'ellipse ou de haricot.

On a constaté que la chambre pulpaire d'une molaire inférieure possède dans certains cas une forme de parallélépipède rectangle. La totalité des racines mésiales sont courbes et possèdent une concavité de la paroi distale, et 99 % présentent une concavité de la paroi mésiale. La rectification du canal pour le rendre rectiligne risque d'affaiblir la tenue mécanique de l'ancrage. Les prémolaires supérieures possèdent une concavité mésiale et des racines frêles. Le canal est de section ovale ou même en forme de 8 dans son premier tiers coronaire. Un sur alésage du canal propre à lui donner une section cylindrique pourrait être à l'origine de fragilisation ou de perforation des parois. La seule partie rectiligne du canal se trouve en général située au tiers coronaire de la racine, et le canal est évasé avec une section aplatie.

### Objet de l'invention

Un premier objet de l'invention consiste à permettre la réalisation d'un ancrage radiculaire sans procéder à une rectification du tiers apical du canal.

Un deuxième objet de l'invention est de proposer un ancrage radiculaire tenant compte des particularités anatomiques des chambres pulpaires et des canaux dentaires.

L'invention propose un ancrage qui n'utilise que le tiers coronaire moyen du canal sans procéder à l'alésage de section cylindrique nécessité par l'usage des tenons proposés dans l'état de l'art.

L'ancrage épouse la forme anatomique du canal. Un simple lissage des parois est nécessaire pour adapter la forme de l'ancrage à la morphologie des tiers coronaire et moyen du canal.

Selon l'invention, le tenon possède dans la partie active endocanalaire au moins deux sections différentes selon le niveau considéré.
Ces sections s'étendent dans le sens de la hauteur et perpendiculairement au grand axe. Les formes des sections peuvent être géométriquement libres pourvu qu'elles soient différentes dans le sens de la hauteur et non circulaires. L'une des deux sections peut posséder un axe de symétrie, mais ne présente pas d'axe de révolution. Par exemple, l'ancrage peut présenter dans son tiers coronaire une section complexe, et dans sa partie moyenne une section différente ovale.

La partie active de l'ancrage est toujours insérée dans le tiers coronaire du canal. On entend par partie active de l'ancrage la partie effectivement insérée dans le logement canalaire. Un intérêt supplémentaire de l'invention est de ne pas compromettre l'étanchéité canalaire en désobturant le tiers apical.

Les deux sections non circulaires et différentes de l'ancrage permettent d'obtenir une rigidité équivalente et même supérieure aux tenons cylindriques. La section de l'ancrage est différente au moins en deux points selon la hauteur considérée.

Un avantage de l'ancrage selon l'invention est d'obtenir un effet anti-rotatoire lors des efforts de torsion: La résistance de l'ancrage à la torsion est nettement supérieure à celle des tenons cylindro-coniques. De même, cette forme supprime les contraintes de cisaillement liées aux efforts de torsion dans la colle ou le produit de scellement

Les ancrages selon l'invention sont adaptés à la forme de la partie coronaire et moyenne du canal dentaire, et s'encastrent selon le système tenon mortaise en friction douce.
Un choix adéquat dans la géométrie des ancrages selon l'invention permet d'adapter au moins un tenon à la partie coronaire et moyenne du canal dentaire de chaque dent sans nécessiter autre chose qu'un lissage de surface associé lorsque c'est nécessaire à un faible enlèvement de matière par abrasion.

Cette opération est obtenue par le passage d'outils animés d'un mouvement mécanique de va-et-vient généré par des moyens ultrasoniques, infra soniques, piézo-électriques, pneumatiques.

Cette opération peut aussi être réalisée à l'aide d'outils rotatifs comme les fraises tournant autour d'un axe de révolution, l'axe de la fraise étant lui même animé d'une trajectoire spécifique en fonction du profil de la section canalaire. Le pilotage de ce mouvement est par exemple obtenu par un système de commande numérique sans limitation de moyens pour obtenir ces mouvements.

Des limes sont revêtues d'un revêtement abrasif permettant un lissage des parois canalaires et elles sont choisies en fonction de l'anatomie du tiers coronaire des canaux.

La partie active de ces limes reproduit la forme de l'ancrage et possède au moins deux sections différentes selon le niveau considéré.

Les ancrages selon l'invention peuvent être fabriqués dans n'importe quel matériau isotrope, par exemple métallique et l'état de surface est aménagé pour favoriser le collage ou le scellement. Il peut s'agir d'un métal fritté ou d'un matériau minéral tel que la céramique, l'hydroxyapatite, sans limitation autre que la bio compatibilité du matériau.

Les ancrages selon l'invention peuvent aussi être fabriqués en matériau composite ayant une matrice organique à renfort de fibres et/ou de particules organiques ou minérales, ou les deux à la fois. L'organisation des fibres de renfort peut être unidirectionnelle , multi ― directionnelle , ou aléatoire. Les fibres peuvent être tissées ou non et leur organisation est libre. La matrice peut aussi être de nature minérale et dans ce cas, les fibres sont choisies parmi les matériaux compatibles, métalliques, minéraux ou organiques sans limitation. Les particules peuvent être de tailles micrométriques, nanométriques ou les deux à la fois. Il peut aussi s'agir de nanotubes.

Selon une caractéristique de l'invention, l'ancrage peut être creux ou peut comporter un conduit interne.
La paroi externe de l'ancrage peut être lisse ou poreuse.
La paroi externe peut être revêtue d'un matériau partiellement polymérisé ou en l'état d'avant polymérisation. Ce matériau peut être une résine photo polymérisable ou à polymérisation retardée initiée par un moyen physique, tel que des ondes de toute nature.

La paroi peut être revêtue d'un matériau de surface différent du constituant de base.

### Description sommaire des dessins

D'autres avantages et caractéristiques de l'invention ressortiront plus clairement de la description qui va suivre d'un mode de réalisation donné à titre d'exemple non-limitatif, et représenté aux dessins annexés, dans lesquels:
- la figure 1 montre une vue schématique en coupe verticale d'une racine équipée d'un tenon selon l'art antérieur ;
- la figure 2 montre une vue schématique en coupe selon la ligne 2-2 de la figure 1, la coupe étant réalisée au tiers coronaire d'une racine ;
- les figures 3 et 4 représentent des vues schématiques en coupe d'une racine avec des tenons cylindriques de l'art antérieur ;
- la figure 5 est une vue schématique en perspective d'un tenon selon l'invention ;
- la figure 6 montre les vues en coupe transversale du tenon de la figure 5 ;
- la figure 7 représente une vue d'une lime pour la préparation de la partie coronaire du canal ;
- la figure 8 illustre la préparation de la partie coronaire du canal à l'aide d'outil rotatifs automatiques ;
- la figure 9 montre une variante de réalisation d'un tenon selon l'invention.

### Description d'un mode de réalisation préférentielle

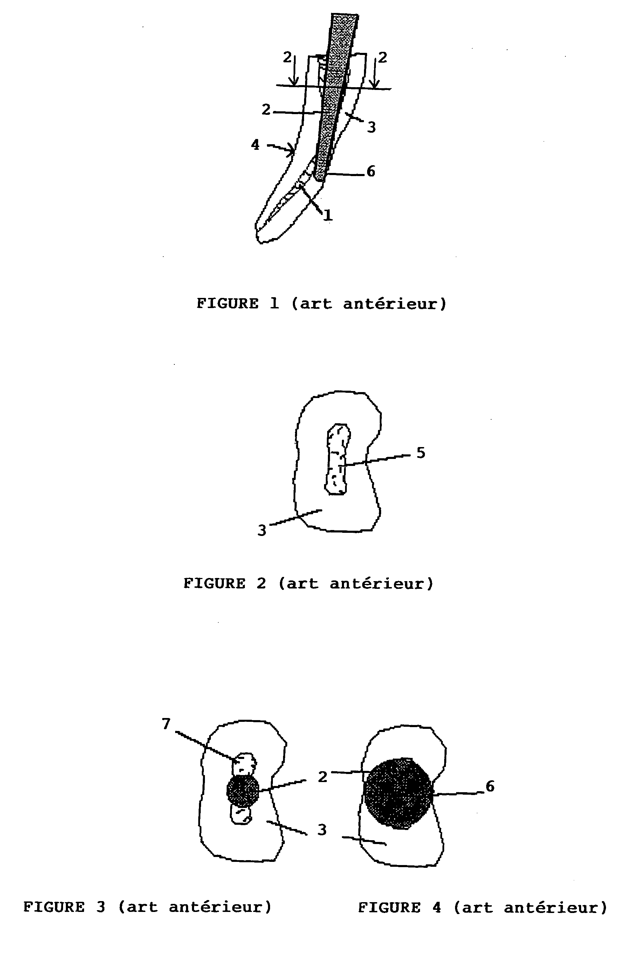

En référence aux figures 1 et 2, la partie inférieure du canal radiculaire 1 de la racine 4 est remplie par un matériau de comblement, et la partie supérieure doit être élargie et mise en forme pour permettre la mise en place d'un tenon 2 servant d'ancrage. Le canal entouré de la dentine 3, présente une section ovalaire 5 dans sa partie coronaire. La paroi canalaire peut présenter une zone fragilisée 6, notamment en cas de perforation.

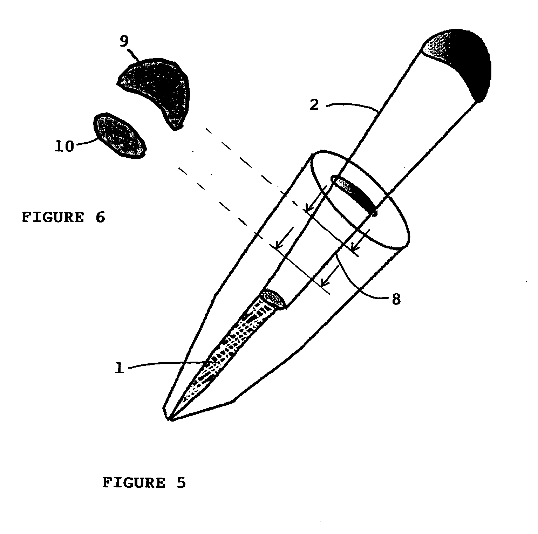

En référence aux figures 3 et 4, on voit bien que les tenons 2 de section circulaire ne sont pas une bonne indication pour les racines ovales, aplaties ou concaves. La recherche d'un contact tenon 2 - dentine 3 étendu (figure 4) entraîne une mutilation tissulaire dangereuse 6. Une sous-instrumentalisation du canal (figure 3) entraîne des contacts partiels entre le tenon 2 et les parois dentinaires 7.

Selon l'invention représentée aux figures 5 et 6, les mêmes repères seront utilisés pour désigner des éléments identiques ou similaires à ceux des figures précédentes.

La partie active du tenon d'ancrage 2 est insérée dans le tiers coronaire 8 du canal. Un intérêt supplémentaire de l'invention est de ne pas compromettre l'étanchéité canalaire en désobturant le tiers apical. Le tenon 2 possède dans sa partie endocanalaire au moins deux sections de formes libres 9, 10, permettant d'obtenir une rigidité équivalente et même supérieure aux tenons cylindriques.

La section de l'ancrage insérée dans le canal est différente au moins en deux points selon l'étage considéré. Il en résulte un effet anti-rotatoire lors des efforts de torsion, et la résistance de l'ancrage à la torsion est nettement supérieure à celle des tenons cylindro-coniques. De même, cette forme supprime les contraintes de cisaillement liées aux efforts de torsion dans la colle ou le produit de scellement.

Le tenon 2 selon l'invention s'encastre dans le canal selon le système tenon mortaise en friction douce. Un choix adéquat dans la géométrie des tenons d'ancrage permet d'adapter au moins un tenon à la partie coronaire et moyenne du canal dentaire de chaque dent, sans nécessiter autre chose qu'un lissage de surface associé à un enlèvement modéré de matière par abrasion.

Cette opération est obtenue par le passage d'outils animés d'un mouvement mécanique de va-et-vient généré manuellement au moyen de limes, ou par des moyens ultrasoniques, infra soniques, piézo-électriques, pneumatiques. Une lime 12 (voir figure 7) est avantageusement revêtue d'un revêtement abrasif 13 permettant un lissage des parois canalaires. La partie active de cette lime reproduit la forme de l'ancrage et possède au moins deux sections différentes selon le niveau considéré.

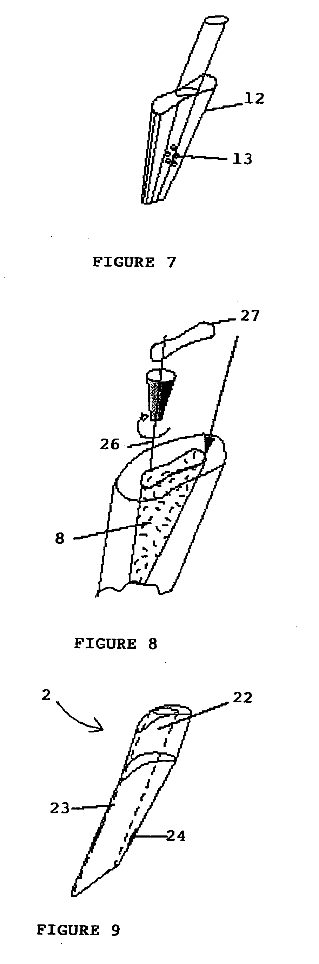

La figure 8 montre que cette opération peu aussi être réalisée à l'aide d'outil rotatifs comme les fraises tournant autour d'un axe de révolution 26, l'axe de la fraise étant lui même animé d'une trajectoire spécifique 27 en fonction du profil de la section canalaire. Le pilotage de ce mouvement est par exemple obtenu par un système de commande numérique.

Selon la figure 9, le tenon 2 peut être creux ou comporter un canal interne 22 longitudinal. La paroi externe du tenon 2 peut être lisse 23, ou poreuse 24.

Les tenons 2 d'ancrage selon l'invention peuvent être fabriqués dans n'importe quel matériau isotrope, par exemple métallique et l'état de surface est aménagé pour favoriser le collage ou le scellement. Il peut s'agir d'un métal fritté ou d'un matériau minéral tel que de la céramique, de l'hydroxyapatite, sans limitation autre que la bio compatibilité du matériau.

Les ancrages selon l'invention peuvent aussi être fabriqués en matériau composite, et comporter une matrice organique à renfort de fibres et/ou de particules organiques ou minérales, ou les deux à la fois. L'organisation des fibres de renfort peut être unidirectionnelle, multidirectionnelle , ou aléatoire. Les fibres peuvent aussi être tissées.

Les avantages du tenon 2 selon l'invention sont les suivants :
- l'ancrage est adapté à la morphologie du tiers coronaire 8 du canal dentaire, et l'étanchéité apicale n'est pas compromise ;
- le trajet du canal n'est pas modifié, et les parois n'ont pas été fragilisées ;
- l'ancrage s'encastre en friction douce dans son logement avec un maximum de surface en contact ;
- la résistance mécanique de l'ancrage n'est pas obtenue par une augmentation de diamètre mais par l'utilisation de profils déterminés en fonction de l'anatomie canalaire ;
- l'ancrage canalaire dentaire anatomique est profilé et préfabriqué .

## Revendications

1. Ancrage canalaire dentaire anatomique et préfabriqué comportant un tenon inséré dans le canal dentaire, et présentant un profil non circulaire lui conférant un effet anti-rotatoire,
**caractérisé en ce que** la partie active endocanalaire du tenon (2) possède au moins deux sections non homothétiques entre elles et différentes dans le sens de la hauteur, et que le tenon (2) s'encastre dans le canal dentaire après lissage des parois au moyen d'outils reproduisant la forme de l'ancrage.

2. Ancrage canalaire dentaire anatomique selon la revendication 1, **caractérisé en ce que** le tenon (2) est préfabriqué dans un matériau isotrope.

3. Ancrage canalaire dentaire anatomique selon la revendication 1, **caractérisé en ce que** le tenon (2) est préfabriqué dans un matériau composite.

4. Ancrage canalaire dentaire anatomique selon la revendication 3, **caractérisé en ce que** le matériau composite est renforcé avec des fibres.

5. Ancrage canalaire dentaire anatomique selon la revendication 3, **caractérisé en ce que** le matériau composite est renforcé avec des fibres et des particules.

6. Ancrage canalaire dentaire anatomique selon la revendication 5, **caractérisé en ce que** les particules sont des nanoparticules ou des nanotubes.

7. Ancrage canalaire dentaire anatomique selon l'une des revendications 1 à 6, **caractérisé en ce que** le tenon (2) comporte un revêtement de surface de nature différente du constituant de base.

8. Ancrage canalaire dentaire anatomique selon l'une des revendications 1 à 7, **caractérisé en ce que** le revêtement de surface est une résine en l'état d'avant polymérisation.

9. Ancrage canalaire dentaire anatomique selon l'une des revendications 1 à 8, **caractérisé en ce que** la paroi de l'ancrage est poreuse.

10. Ancrage canalaire dentaire anatomique selon l'une des revendications 1 à 9, **caractérisé en ce que** le tenon (2) est muni d'un conduit interne.

11. Ancrage canalaire dentaire anatomique selon la revendication 1, **caractérisé en ce que** les outils sont animés d'un mouvement de va et vient dans la direction de la profondeur du canal ou d'un mouvement de rotation autour d'un axe lui même animé d'une trajectoire spécifique.
